# EUROPEAN PATENT APPLICATION

(11) **EP 2 708 523 A1**
(43) Date of publication of application: **19.03.2014**
(21) Application number: 13183489.7
(22) Date of filing: 09.09.2013
(51) Int. Cl.: C04B 35/565, C04B 35/626, C04B 35/632, C04B 35/636, B01D 46/24, C04B 35/638, C04B 35/63, C04B 41/87

(54) **Manufacturing method of honeycomb structure with electrodes**

(30) Priority: 13.09.2012 JP 2012201516
(71) Applicant: NGK Insulators, Ltd., Nagoya-city, Aichi 467-8530 (JP)
(72) Inventor: Hosoi, Yusuke, Nagoya-city, Aichi 467-8530 (JP); Noro, Takashi, Nagoya-city, Aichi 467-8530 (JP); Watanabe, Tsuyoshi, Nagoya-city, Aichi 467-8530 (JP)
(74) Representative: Naylor, Matthew John

(57) **Abstract**

There is disclosed a manufacturing method of a honeycomb structure which can manufacture the honeycomb structure having suitable adhesion properties between a honeycomb structure portion and each electrode portion. The manufacturing method of the honeycomb structure includes a formed honeycomb body preparing step of extruding a forming raw material containing a ceramic raw material and an organic binder, to prepare a formed honeycomb body having partition walls with which a plurality of cells extending from one end surface to the other end surface are formed to define through channels of a fluid, and an outer peripheral wall positioned in the outermost periphery; a dried honeycomb body preparing step of drying the formed honeycomb body to prepare the dried honeycomb body; a honeycomb body with unfired electrodes preparing step of applying an electrode forming slurry containing a ceramic raw material and water to a side surface of the dried honeycomb body, and then maintaining the honeycomb body in a temperature range of 0 to 80°C for three seconds to 48 hours to form the unfired electrodes, to prepare the honeycomb body with the unfired electrodes; and a honeycomb structure preparing step of drying and firing the honeycomb body with the unfired electrodes to prepare the honeycomb structure.

## Description

The present application is an application based on JP-2012-201516 filed on September 13, 2012 with the Japanese Patent Office, the entire contents of which are incorporated herein by reference.

### BACKGROUND OF THE INVENTION

### Field of the Invention

The present invention relates to a manufacturing method of a honeycomb structure, and more particularly, it relates to a manufacturing method of a honeycomb structure which can manufacture a honeycomb structure having suitable adhesion properties between a honeycomb structure portion and each electrode portion.

### Background Art

Heretofore, a ceramic honeycomb structure onto which a catalyst is loaded has been used in treatment of harmful substances in an exhaust gas discharged from a car engine. Specifically, for example, it is known that a honeycomb structure constituted of a sintered silicon carbide body is used in purification of an exhaust gas (see, e.g., Patent Document 1).

When the exhaust gas is treated by the catalyst loaded onto the honeycomb structure, it is necessary to raise a temperature of the catalyst up to a predetermined temperature, but at the start of the engine, the catalyst temperature is low, and hence there has been the problem that the exhaust gas is not sufficiently purified.

To solve the problem, there is disclosed that a honeycomb structure made of a conductive ceramic material and including electrodes at both ends can be used as a catalyst carrier with a heater (see, e.g., Patent Document 2). Moreover, there is disclosed a ceramic honeycomb structure in which "electrodes made of ceramic material" are arranged on a side surface, and which generates heat by electricity conduction (see, e.g., Patent Document 3). In the honeycomb structure including "the electrodes made of ceramic material" on the side surface, further enhancement of adhesion properties between the electrodes and the honeycomb structure portion has been a problem to be solved.

On the other hand, there is disclosed a honeycomb structure in which an intermediate layer is interposed between a honeycomb structure portion and each electrode (side surface electrode), to enhance adhesion properties between the honeycomb structure portion and the side surface electrodes (see, e.g., Patent Document 4). In the honeycomb structure disclosed in Patent Document 4, a particle diameter such as an average particle diameter of a ceramic material constituting the intermediate layer is a value between an average particle diameter of a ceramic material constituting the honeycomb structure portion and an average particle diameter of a ceramic material constituting the side surface electrodes.
[Patent Document 1] JP 4136319
[Patent Document 2] JP-A-H08-141408
[Patent Document 3] WO 2011/043434
[Patent Document 4] WO 2011/105567

### SUMMARY OF THE INVENTION

As described above, a honeycomb structure disclosed in Patent Document 4 has an excellent structure to enhance adhesion properties between a honeycomb structure portion and each side surface electrode.

On the other hand, a method of enhancing the adhesion properties between the honeycomb structure portion and each electrode without interposing an intermediate layer has been required.

The present invention has been developed in view of the above-mentioned problems, and an object thereof is to provide a manufacturing method of a honeycomb structure which can manufacture a honeycomb structure having suitable adhesion properties between a honeycomb structure portion and each electrode portion.

To achieve the above-mentioned object, according to the present invention, there is provided a manufacturing method of a honeycomb structure as follows.
[1] A manufacturing method of a honeycomb structure comprising: a formed honeycomb body preparing step of extruding a forming raw material containing a ceramic raw material and an organic binder, to prepare a formed honeycomb body having partition walls with which a plurality of cells extending from one end surface to the other end surface are formed to define through channels of a fluid, and an outer peripheral wall positioned in the outermost periphery; a dried honeycomb body preparing step of drying the formed honeycomb body to prepare the dried honeycomb body; a honeycomb body with unfired electrodes preparing step of applying an electrode forming slurry containing a ceramic raw material and water to a side surface of the dried honeycomb body, and then maintaining the honeycomb body in a temperature range of 0 to 80°C for three seconds to 48 hours to form the unfired electrodes, to prepare the honeycomb body with the unfired electrodes; and a honeycomb structure preparing step of drying and firing the honeycomb body with the unfired electrodes to prepare the honeycomb structure.
[2] The manufacturing method of the honeycomb structure according to the above [1], wherein the ceramic raw material in the forming raw material and the ceramic raw material in the electrode forming slurry contain metal silicon and silicon carbide particles as main components, or contain the silicon carbide particles as the main components.
[3] The manufacturing method of the honeycomb structure according to the above [1] or [2], wherein a viscosity of the electrode forming slurry at 20°C is 500 Pa●s or less.
[4] The manufacturing method of the honeycomb structure according to any one of the above [1] to [3], wherein the temperature of the dried honeycomb body during the application of the electrode forming slurry to the side surface of the dried honeycomb body is from 0 to 80°C.

In the manufacturing method of a honeycomb structure of the present invention, a forming raw material containing a ceramic raw material and an organic binder is extruded to prepare a formed honeycomb body, and the formed honeycomb body is dried to prepare the dried honeycomb body. Therefore, the dried honeycomb body contains the organic binder. Then, "an electrode forming slurry containing a ceramic raw material and water" is applied to the dried honeycomb body. Afterward, the dried honeycomb body to which the electrode forming slurry has been applied is maintained in a temperature range of 0 to 80°C for three seconds to 48 hours to form unfired electrodes. Therefore, the water in the electrode forming slurry suitably permeates the organic binder in the dried honeycomb body. Moreover, when the water in the electrode forming slurry permeates the organic binder in the dried honeycomb body, the ceramic raw material in the electrode forming slurry strongly adheres the ceramic raw material in the dried honeycomb body. In consequence, it is possible to obtain a honeycomb structure having suitable adhesion properties between a honeycomb structure portion and each electrode portion.

### BRIEF DESCRIPTION OF THE DRAWINGS

Fig. 1 is a perspective view schematically showing a formed honeycomb body prepared in a formed honeycomb body preparing step in an embodiment of the manufacturing method of honeycomb structure of the present invention;
Fig. 2 is a schematic view showing a cross section parallel to a cell extending direction of the formed honeycomb body prepared in the formed honeycomb body preparing step, in the embodiment of the manufacturing method of honeycomb structure of the present invention;
Fig. 3 is a perspective view schematically showing a honeycomb body with unfired electrodes which is prepared in a honeycomb body with the unfired electrodes preparing step in the embodiment of the manufacturing method of honeycomb structure of the present invention;
Fig. 4 is a schematic view showing a cross section parallel to the cell extending direction of the honeycomb body with the unfired electrodes prepared in the honeycomb body with the unfired electrodes preparing step , in the embodiment of the manufacturing method of honeycomb structure of the present invention;
Fig. 5 is a schematic view showing a cross section perpendicular to the cell extending direction of the honeycomb body with the unfired electrodes prepared in the honeycomb body with the unfired electrodes preparing step , in the embodiment of the manufacturing method of honeycomb structure of the present invention; and
Fig. 6 is a perspective view schematically showing the honeycomb structure manufactured by the embodiment of the manufacturing method of honeycomb structure of the present invention.

### DESCRIPTION OF THE PREFERRED EMBODIMENTS

Hereinafter, embodiments of the present invention will be described in detail with reference to the drawings, but it should be understood that the present invention is not limited to the following embodiments and that suitable design modifications, improvements and the like are added to the following embodiments on the basis of ordinary knowledge of a person skilled in the art without departing from the gist of the present invention.

An embodiment of the manufacturing method of honeycomb structure of the present invention includes a formed honeycomb body preparing step, a dried honeycomb body preparing step, a honeycomb body with unfired electrodes preparing step, and a honeycomb structure preparing step. Moreover, the formed honeycomb body preparing step is a step of extruding a forming raw material, to prepare a formed honeycomb body having partition walls with which "a plurality of cells extending from one end surface to the other end surface" are formed "to define through channels of a fluid", and an outer peripheral wall positioned in the outermost periphery. The forming raw material contains a ceramic raw material and an organic binder. The dried honeycomb body preparing step is a step of drying the formed honeycomb body to prepare the dried honeycomb body. The honeycomb body with the unfired electrodes preparing step is a step of applying an electrode forming slurry containing ceramic raw material and water to a side surface of the dried honeycomb body, and then maintaining the honeycomb body in a temperature range of 0 to 80°C for three seconds to 48 hours to form the unfired electrodes and prepare the honeycomb body with the unfired electrodes. The honeycomb structure preparing step is a step of drying and firing the honeycomb body with the unfired electrodes to prepare the honeycomb structure. Moreover, in the preparing step of the honeycomb body with the unfired electrodes, a viscosity of the electrode forming slurry at 20°C is preferably 500 Pa●s or less. Furthermore, the temperature of the dried honeycomb body during the application of the electrode forming slurry to the side surface of the dried honeycomb body is preferably from 0 to 80°C.

Consequently, in the manufacturing method of honeycomb structure of the present embodiment, the forming raw material containing the ceramic raw material and the organic binder is extruded to prepare the formed honeycomb body, and the formed honeycomb body is dried to prepare the dried honeycomb body. Therefore, the dried honeycomb body contains the organic binder. Then, "the electrode forming slurry containing the ceramic raw material and the water" is applied to the dried honeycomb body. Afterward, the dried honeycomb body to which the electrode forming slurry has been applied is maintained in the temperature range of 0 to 80°C for three seconds to 48 hours to form the unfired electrodes. Therefore, the water in the electrode forming slurry suitably permeates the organic binder in the dried honeycomb body. At this time, the electrode forming slurry applied to the dried honeycomb body is dried to form the unfired electrodes. Moreover, when the water in the electrode forming slurry permeates the organic binder in the dried honeycomb body, the ceramic raw material in the electrode forming slurry strongly adheres the ceramic raw material in the dried honeycomb body. In consequence, it is possible to obtain the honeycomb structure having suitable adhesion properties between a honeycomb structure portion and each electrode portion. Hereinafter, the respective steps of the manufacturing method of honeycomb structure of the present embodiment will be described.

### (1) Formed Honeycomb Body Preparing Step:

In the formed honeycomb body preparing step, the forming raw material is extruded to prepare the formed honeycomb body. The forming raw material contains the ceramic raw material and the organic binder. There is not any special restriction on a method of preparing the formed honeycomb body, except that the forming raw material contains the ceramic raw material and the organic binder, and a known method can be used. An example of the method is the following method.

As described above, the forming raw material contains the ceramic raw material and the organic binder, and preferably additionally contains a surfactant, a sintering auxiliary agent, a pore former, water and the like. The forming raw material can be prepared by mixing these raw materials.

The ceramic raw material in the forming raw material is "a ceramic material" or "a raw material which is fired to become ceramic material". In each case, the ceramic raw material becomes the ceramic material after the firing. The ceramic raw material in the forming raw material preferably contains metal silicon and silicon carbide particles (silicon carbide powder) as main components, or contains the silicon carbide particles (the silicon carbide powder) as the main components. Consequently, the obtained honeycomb structure becomes conductive. Metal silicon is also preferably in the form of metal silicon particles (metal silicon powder). Here, the main component means a component contained as much as 90 mass% or more. Moreover, when "the metal silicon and silicon carbide particles are contained as the main components", it is meant that a total of masses of the metal silicon and silicon carbide particles is 90 mass% or more of the whole material (the ceramic raw material). Furthermore, examples of components other than the main components included in the ceramic raw material include SiO₂, SrCO₃, Al₂O₃, MgCO₃, and cordierite.

When silicon carbide is used as the main component of the ceramic raw material, silicon carbide is sintered by the firing. Furthermore, when the metal silicon and silicon carbide particles are used as the main components of the ceramic raw material, the silicon carbide particles as aggregates can be bound to one another using metal silicon as abonding material by the firing.

When the silicon carbide particles (the silicon carbide powder) and the metal silicon particles (the metal silicon powder) are used as the ceramic raw materials, a mass of the metal silicon particles is preferably from 10 to 40 mass% of a total of masses of the silicon carbide particles and the metal silicon particles. An average particle diameter of the silicon carbide particles is preferably from 10 to 50 µm, and further preferably from 15 to 35 µm. An average particle diameter of the metal silicon particles is preferably from 0.1 to 20 µm, and further preferably from 1 to 10 µm. Moreover, when the only silicon carbide particles are used as the ceramic raw materials, a mass ratio (small diameter particles : large diameter particles) between the silicon carbide particles having an average particle diameter of 0.05 to 1 µm (the small diameter particles) and the silicon carbide particles having an average particle diameter of 10 to 50 µm (the large diameter particles) is preferably from 10:90 to 50:50. Furthermore, a mass ratio between the silicon carbide particles having an average particle diameter of 0.1 to 0.5 µm and the silicon carbide particles having an average particle diameter of 15 to 35 µm is preferably from 20:80 to 40:60. The average particle diameters of the silicon carbide particles and the metal silicon particles are values measured by a laser diffraction method.

Examples of the organic binder include methylcellulose, glycerin, and hydroxypropyl methylcellulose. As the organic binder, one type of organic binder or a plurality of types of organic binders may be used. A content of the organic binder is preferably from 5 to 10 parts by mass, when the mass of the whole ceramic raw material is 100 parts by mass.

As the surfactant, ethylene glycol, dextrin or the like can be used. As the surfactant, one type of surfactant or a plurality of types of surfactants may be used. A content of the surfactant is preferably from 0.1 to 2.0 parts by mass, when the mass of the whole ceramic raw material is 100 parts by mass.

As the sintering auxiliary agent, strontium carbonate, SiO₂ Al₂O₃, MgCO₃, cordierite or the like can be used. As the sintering auxiliary agent, one type of sintering auxiliary agent or a plurality of types of sintering auxiliary agents may be used. A content of the sintering auxiliary agent is preferably from 0.1 to 3 parts by mass, when the mass of the whole ceramic raw material is 100 parts by mass.

There is not any special restriction on the pore former, as long as pores are formed after the firing, and examples of the pore former include graphite, starch, resin balloon, a water-absorbing resin, and silica gel. As the pore former, one type of pore former or a plurality of types of pore formers may be used. A content of the pore former is preferably from 0.5 to 10 parts by mass, when the mass of the whole ceramic raw material is 100 parts by mass.

A content of the water is preferably from 20 to 60 parts by mass, when the mass of the whole ceramic raw material is 100 parts by mass.

During the extrusion forming of the forming raw material, first, the forming raw material is preferably kneaded to form a kneaded material. There is not any special restriction on a method of kneading the forming raw material to form the kneaded material, and an example of the method is a method using a kneader, a vacuum clay kneader or the like. Here, the kneaded material is also as aspect of the forming raw material.

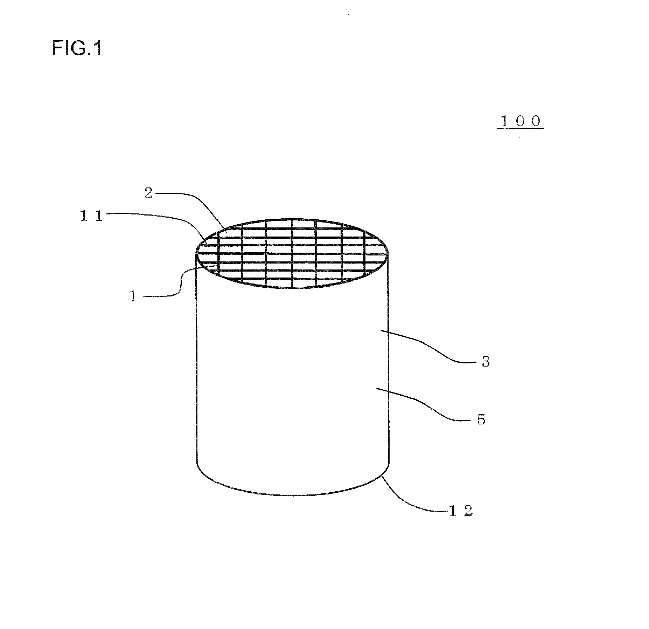

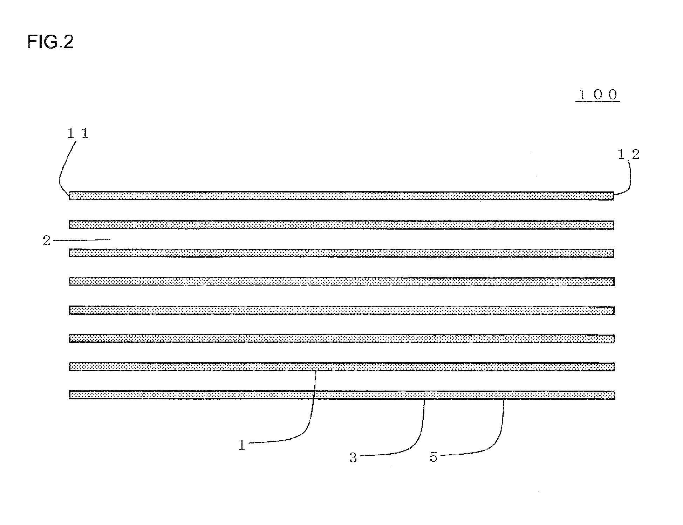

Next, the kneaded material is preferably extruded to prepare the formed honeycomb body. During the extrusion forming, a die having a desired entire shape, cell shape, partition wall thickness, cell density and the like is preferably used. As shown in Figs. 1 and 2, the formed honeycomb body 100 has partition walls 1 with which "a plurality of cells 2 extending from one end surface 11 to the other end surface 12" are formed to "define through channels of a fluid", and an outer peripheral wall 3 positioned in the outermost periphery. The surface of the outer peripheral wall 3 is a side surface 5 of the formed honeycomb body 100. The partition walls 1 of the formed honeycomb body 100 are non-dried and unfired partition walls. Fig. 1 is a perspective view schematically showing the formed honeycomb body 100 prepared in "the formed honeycomb body preparing step in the embodiment of the manufacturing method of honeycomb structure of the present invention". Fig. 2 is a schematic view showing a cross section parallel to an extending direction of the cells 2 of the formed honeycomb body 100 prepared in "the formed honeycomb body preparing step", "in the embodiment of the manufacturing method of honeycomb structure of the present invention".

### (2) Dried Honeycomb Body Preparing Step:

The dried honeycomb body preparing step is a step of drying the obtained formed honeycomb body to prepare the dried honeycomb body. There is not any special restriction on drying conditions, and known conditions can be used. For example, the drying is preferably performed at 80 to 120°C for 0.5 to five hours. The formed honeycomb body can be dried using an electric furnace, a gas furnace, a microwave heating furnace, a high frequency dielectric heating furnace or the like.

### (3) Honeycomb Body with Unfired Electrodes Preparing Step:

In the honeycomb body with the unfired electrodes preparing step, first, the electrode forming slurry containing the ceramic raw material and water is applied to the side surface of the dried honeycomb body. Afterward, the dried honeycomb body to which the electrode forming slurry has been applied is maintained in a temperature range of 0 to 80°C for three seconds to 48 hours to form the unfired electrodes and prepare the honeycomb body with the unfired electrodes.

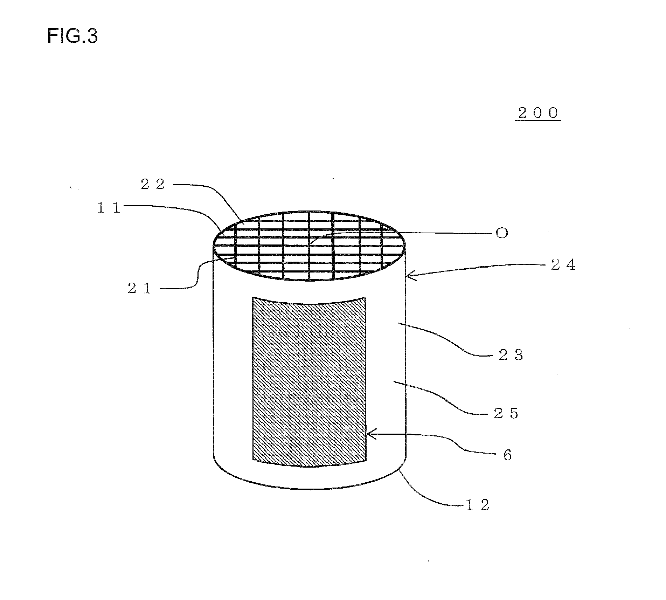

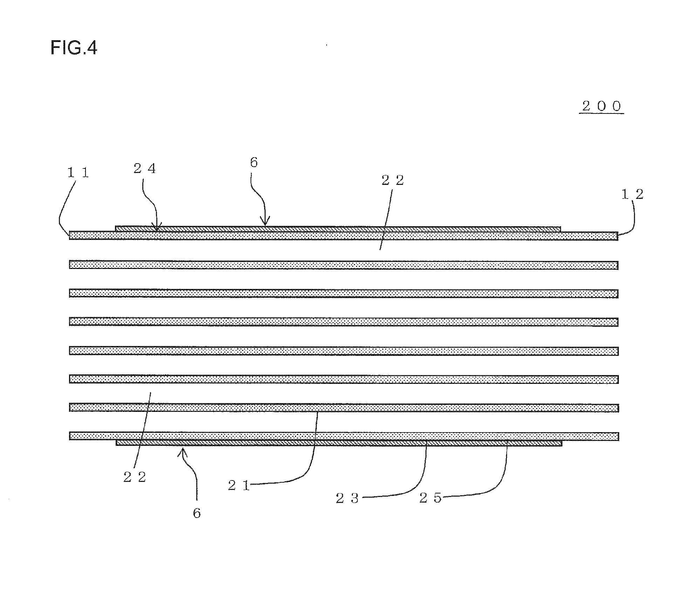

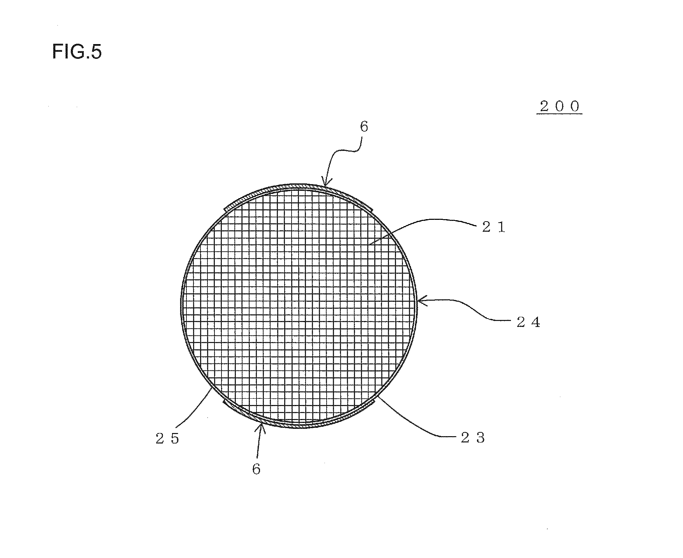

As shown in Fig. 3 to Fig. 5, in a honeycomb body 200 with unfired electrodes, a dried honeycomb body 24 is provided with unfired electrodes 6 each having a wide rectangular shape, extending in a strip state in the cell extending direction and also extending in a peripheral direction. The peripheral direction is a direction along the side surface of the dried honeycomb body 24 in a cross section perpendicular to the cell extending direction. The dried honeycomb body 24 has partition walls 21 with which a plurality of cells 22 extending from one end surface 11 to the other end surface 12 are formed to define through channels of a fluid, and an outer peripheral wall 23 positioned in the outermost periphery. A side surface 25 of the dried honeycomb body 24 is the surface of the outer peripheral wall 23 of the dried honeycomb body 24. Fig. 3 is a perspective view schematically showing the honeycomb body 200 with the unfired electrodes which is prepared in the preparing step of the honeycomb body with the unfired electrodes in the embodiment of the manufacturing method of honeycomb structure of the present invention. Fig. 4 is a schematic view showing a cross section parallel to the extending direction of the cells 22 of the honeycomb body 200 with the unfired electrodes prepared in the preparing step of the honeycomb body with the unfired electrodes, in the embodiment of the manufacturing method of honeycomb structure of the present invention. Fig. 5 is a schematic view showing a cross section perpendicular to the extending direction of the cells 22 of the honeycomb body 200 with the unfired electrodes prepared in the preparing step of the honeycomb body with the unfired electrodes, in the embodiment of the manufacturing method of honeycomb structure of the present invention.

The electrode forming slurry for use in the preparing step of the honeycomb body with the unfired electrodes contains the ceramic raw material and the water, and preferably additionally contains a surfactant, a pore former and the like.

As the ceramic raw material, the ceramic raw material for use in preparing the formed honeycomb body is preferably used. For example, when the main components of the ceramic raw material for use in preparing the formed honeycomb body are the silicon carbide particles and metal silicon, the silicon carbide particles and metal silicon are preferably also used as the ceramic raw materials of the electrode forming slurry.

When the silicon carbide particles (silicon carbide powder) and the metal silicon particles (metal silicon powder) are used as the main components of the ceramic raw material, a mass of the metal silicon particles is preferably from 20 to 35 mass% of a total of masses of the silicon carbide particles and the metal silicon particles. An average particle diameter of the silicon carbide particles is preferably from 10 to 100 µm, and further preferably from 15 to 75 µm. An average particle diameter of the metal silicon particles is preferably from 0.1 to 20 µm, and further preferably from 1 to 10 µm. Moreover, when the silicon carbide particles are used as the main components of the ceramic raw material, a mass ratio (A:B) between silicon carbide particles (A) having an average particle diameter of 0.05 to 1 µm and silicon carbide particles (B) having an average particle diameter of 10 to 100 µm is preferably from 10:90 to 50:50. Furthermore, a mass ratio between the silicon carbide particles having an average particle diameter of 0.1 to 0.5 µm and the silicon carbide particles having an average particle diameter of 15 to 75 µm is further preferably from 20:80 to 40:60.

Examples of the organic binder include methylcellulose, glycerin, and hydroxypropyl methylcellulose. As the organic binder, one type of organic binder or a plurality of types of organic binders may be used. A content of the organic binder is preferably from 0.1 to 2 parts by mass, when the mass of the whole ceramic raw material is 100 parts by mass.

As the surfactant, ethylene glycol, dextrin or the like can be used. As the surfactant, one type of surfactant or a plurality of types of surfactants may be used. A content of the surfactant is preferably from 5 to 15 parts by mass, when the mass of the whole ceramic raw material is 100 parts by mass.

There is not any special restriction on the pore former, as long as the pores are formed after the firing, and examples of the pore former include graphite, starch, resin balloon, water-absorbing resin, and silica gel. As the pore former, one type of pore former or a plurality of types of pore formers may be used. A content of the pore former is preferably from 0.5 to 10 parts by mass, when the mass of the whole ceramic raw material is 100 parts by mass.

A content of the water is preferably from 25 to 65 parts by mass, when the mass of the whole ceramic raw material is 100 parts by mass.

There is not any special restriction on a method of applying an electrode forming slurry to the side surface of the dried honeycomb body. For example, the slurry can be applied using a brush, or using a printing technique.

The viscosity of the electrode forming slurry at 20°C is preferably 500 Pa●s or less, and further preferably from 10 to 200 Pa●s. In excess of 500 Pa●s, the electrode forming slurry is not easily applied to the side surface of the dried honeycomb body sometimes.

When the electrode forming slurry is being applied to the side surface of the dried honeycomb body, a temperature of the dried honeycomb body is preferably from 0 to 80°C, and further preferably from 10 to 60°C. When the temperature is lower than 0°C, the viscosity of the electrode forming slurry increases, and the water in the electrode forming slurry does not easily permeate the dried honeycomb body. When the temperature is higher than 80°C, the water in the electrode forming slurry evaporates fast, and hence the water in the electrode forming slurry does not easily permeate the dried honeycomb body. A method of measuring the temperature of the dried honeycomb body is as follows. That is, the side surface of the dried honeycomb body to which the slurry is applied is measured using a thermocouple contact type thermometer.

A time to maintain the dried honeycomb body at a temperature in a range of 0 to 80°C after the electrode forming slurry has been applied is from three seconds to 48 hours, preferably from five to 300 seconds, and further preferably from 10 to 180 seconds. Here, for example, when "the maintaining time is three seconds", it is meant that the drying is performed after the elapse of three seconds from the end of the application of the electrode forming slurry to the dried honeycomb body. When the maintaining time is shorter than three seconds, the time is excessively short for the permeation of the water in the electrode forming slurry into the dried honeycomb body. Therefore, adhesion properties between each electrode portion and the honeycomb structure portion in the obtained honeycomb structure deteriorate. When the maintaining time is longer than 48 hours, a manufacturing time unfavorably lengthens. Moreover, a time required to apply the electrode forming slurry to the dried honeycomb body is preferably from 0.5 to 200 seconds, and further preferably from 1 to 100 seconds. When the time is shorter than 0.5 second, a thickness of each formed electrode may become non-uniform sometimes. When the time is longer than 200 seconds, the electrode forming slurry dries during the formation of the electrodes, and the thickness of each formed electrode may become non-uniform, or an interfacial surface may be formed between the base material and each electrode sometimes.

A thickness of each unfired electrode is preferably from 0.025 to 3 mm, and further preferably from 0.05 to 0.5 mm. When the thickness is smaller than 0.025 mm, each obtained electrode portion becomes thin. Therefore, an electric resistance of the electrode portion of the obtained honeycomb structure increases, and hence heat cannot uniformly be generated. When the thickness is larger than 3 mm, the obtained electrode portion becomes thick, and hence the obtained honeycomb structure may be damaged sometimes at the time of canning.
(4) Honeycomb Structure Preparing Step: The honeycomb structure preparing step is a step of drying and firing the honeycomb body with the unfired electrodes to prepare the honeycomb structure. There is not any special restriction on a drying method. For example, hot air drying is preferably performed at a temperature in excess of 80°C and 120°C or less for 0.5 to three hours.

Firing conditions can suitably be determined in accordance with the type of the ceramic raw material for use in preparing the formed honeycomb body, and the type of the ceramic raw material for use in the electrode forming slurry. When silicon carbide is used as the main component of the ceramic raw material for use in preparing the formed honeycomb body and the main component of the ceramic raw material for use in the electrode forming slurry, the firing conditions are preferably as follows. That is, the heating is preferably performed at 2300 to 2700°C in an inert atmosphere of argon or the like for 0.5 to five hours. When silicon carbide and metal silicon are used as the main components of the ceramic raw material for use in preparing the formed honeycomb body and the main components of the ceramic raw material for use in the electrode forming slurry, the firing conditions are preferably as follows. That is, the heating is preferably performed at 1425 to 1500°C in the inert atmosphere of argon or the like for 0.5 to five hours. There is not any special restriction on a firing method, and the firing can be performed using an electric furnace, a gas furnace or the like.

For enhancement of durability, an oxidation treatment is preferably performed by leaving the honeycomb structure in an air atmosphere at 1200 to 1350°C for one to ten hours after the firing.

Moreover, calcination is preferably performed to remove the binder and the like, after drying the formed honeycomb body with the unfired electrodes and prior to the firing. The calcination is preferably performed at 400 to 500°C in the atmosphere for 0.5 to 20 hours.

There is not any special restriction on a calcination and firing method, and the calcination and firing can be performed using an electric furnace, a gas furnace or the like.
(5) Honeycomb Structure: Next, the honeycomb structure manufactured by the embodiment of the manufacturing method of honeycomb structure of the present invention will be described.

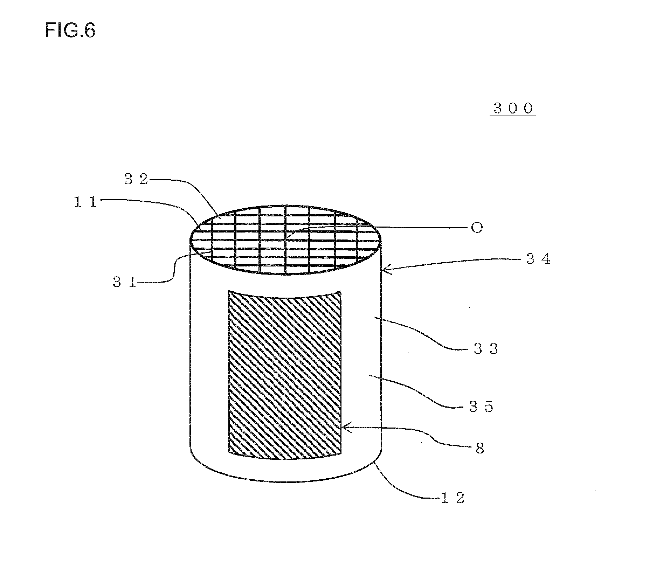

As shown in Fig. 6, a honeycomb structure 300 manufactured by the manufacturing method of honeycomb structure of the present embodiment includes a honeycomb structure portion 34 and a pair of electrode portions 8 and 8. The honeycomb structure portion 34 has porous partition walls 31 with which a plurality of cells 32 extending from one end surface 11 to the other end surface 12 are formed to define through channels of a fluid, and an outer peripheral wall 33 positioned in the outermost periphery. The pair of electrode portions 8 and 8 are arranged on a side surface 35 of the honeycomb structure portion 34. The formed honeycomb body in the manufacturing method of honeycomb structure of the present embodiment is fired to become the honeycomb structure portion 34. The partition walls 31 and the outer peripheral wall 33 constituting the honeycomb structure 300 are made of ceramic obtained by firing the ceramic raw material. Moreover, the electrode portions 8 are also made of ceramic obtained by firing the ceramic raw material. Furthermore, in the honeycomb structure manufactured by the manufacturing method of honeycomb structure of the present embodiment, a shape of the honeycomb structure portion 34 is cylindrical. Fig. 6 is a perspective view schematically showing the honeycomb structure 300 manufactured by the embodiment of the manufacturing method of honeycomb structure of the present invention.

An electric resistivity of the honeycomb structure portion 34 is preferably from 1 to 200 Ωcm. Consequently, when a voltage is applied between the pair of electrode portions 8 and 8, the heat can effectively be generated in the honeycomb structure (the honeycomb structure portion). Especially, when a current is allowed to flow using a high voltage power source (e.g., from 12 to 900 V), the current does not excessively flow, and the honeycomb structure can suitably be used as a heater. It is to be noted that the electric resistivity of the honeycomb structure portion is a value at 400°C. Moreover, the electric resistivity of the honeycomb structure portion is a value measured by a four-terminal method.

Moreover, each of the pair of electrode portions 8 and 8 is preferably formed into a strip shape extending in an extending direction of the cells 32 of the honeycomb structure portion 34. Furthermore, the electrode portion 8 is preferably formed to be so wide as to also extend in a peripheral direction of the honeycomb structure portion 34. Additionally, in a cross section perpendicular to the extending direction of the cells 32, the electrode portion 8 of the pair of electrode portions 8 and 8 is preferably disposed on the side opposite to the other electrode portion 8 of the pair of electrode portions 8 and 8, the sides being opposite sides of a center O of the honeycomb structure portion 34 to each other. Consequently, when the voltage is applied between the pair of electrode portions 8 and 8, a deviation of the current flowing through the honeycomb structure portion 34 can be suppressed. Moreover, a deviation of the heat generation in the honeycomb structure portion 34 can be suppressed.

In the honeycomb structure 300, a material of the partition walls 31 and the outer peripheral wall 33 preferably contains "a silicon-silicon carbide composite material" or "silicon carbide" as a main component. When such a material is used, the electric resistivity of the honeycomb structure portion can be from 1 to 200 Ωcm. Here, the silicon-silicon carbide composite material contains silicon carbide particles as aggregates, and metal silicon as a binding agent to bind the silicon carbide particles, and a plurality of silicon carbide particles are preferably bound by metal silicon so as to form pores among the silicon carbide particles. Moreover, the above "silicon carbide" is the sintered silicon carbide. When silicon carbide and metal silicon are used as the ceramic raw materials in the forming raw material, the material of the partition walls 31 and the outer peripheral wall 33 is "the silicon-silicon carbide composite material".

A thickness of the electrode portion 8 is preferably from 0.025 to 3 mm, and further preferably from 0.05 to 0.5 mm. In such a range, the heat can uniformly be generated, and a strength at the canning increases. When the thickness of the electrode portion 8 is smaller than 0.025 mm, the electric resistivity increases, and the heat cannot uniformly be generated sometimes. When the thickness is larger than 3 mm, the electrode portion may be damaged sometimes at the time of canning.

In the honeycomb structure manufactured by the manufacturing method of honeycomb structure of the present embodiment, a main component of the electrode portions 8 and the main component of the partition walls 31 and the outer peripheral wall 33 are preferably the same. Moreover, a material of the electrode portions 8 and the material of the partition walls 31 and the outer peripheral wall 33 are further preferably the same. When the ceramic raw material in the electrode forming slurry and the ceramic raw material in the forming raw material are the same, the material of the electrode portions 8 and the material of the partition walls 31 and the outer peripheral wall 33 can be the same.

An electric resistivity of the electrode portion 8 is preferably from 0.1 to 100 Ωcm, and further preferably from 0.1 to 50 Ωcm. When the electric resistivity of the electrode portion 8 is in such a range, the pair of electrode portions 8 and 8 effectively serve as electrodes in a piping line through which a high temperature exhaust gas flows. In the honeycomb structure 300, the electric resistivity of the electrode portion 8 is preferably smaller than the electric resistivity of the honeycomb structure portion 34. It is to be noted that the electric resistivity of each electrode portion is a value at 400°C. Moreover, the electric resistivity of the electrode portion is a value measured by four-terminal method.

A porosity and an average pore diameter of the electrode portions 8 can suitably be determined so as to obtain a desirable electric resistivity in accordance with a use application.

A partition wall thickness, a cell density, a partition wall porosity, a partition wall average pore diameter and an outer peripheral wall thickness of the honeycomb structure 300 (the honeycomb structure portion 34) can suitably be determined in accordance with the use application.

There is not any special restriction on a shape of the honeycomb structure of the present embodiment, as long as the shape is tubular, and examples of the shape include a tubular shape with a round bottom surface (or a round cross section perpendicular to a central axis) (a cylindrical shape), a tubular shape with an oval bottom surface, and a tubular shape with an elliptic bottom surface. Moreover, as to a size of the honeycomb structure, an area of the bottom surface is preferably from 2000 to 20000 mm², and further preferably from 4000 to 10000 mm². Furthermore, a length of the honeycomb structure in a central axis direction is preferably from 50 to 200 mm, and further preferably from 75 to 150 mm.

A cell shape in a cross section of the honeycomb structure of the present embodiment which is perpendicular to the cell extending direction is preferably a quadrangular shape, a hexagonal shape, an octagonal shape, or any combination of these shapes. With such a cell shape, a pressure loss at the flowing of the exhaust gas through the honeycomb structure and a purifying performance of a catalyst enhance. A shape of the cells 32 in a cross section of the honeycomb structure 300 shown in Fig. 6 which is perpendicular to the cell extending direction is quadrangular.

### Examples

Hereinafter, the present invention will further specifically be described with respect to examples, but the present invention is not limited to these examples.

### (Example 1)

As ceramic raw materials, silicon carbide particles (silicon carbide powder) and metal silicon particles (metal silicon powder) were used. The silicon carbide powder and the metal silicon powder were mixed at a mass ratio of 70:30. To the obtained mixture, strontium carbonate was added as a sintering auxiliary agent, methylcellulose was added as an organic binder, and water was further added, to prepare a forming raw material. A content of methylcellulose was 7 parts by mass, when a total of masses of silicon carbide and metal silicon was 100 parts by mass. A content of strontium carbonate was 1 part by mass, when the total of the masses of silicon carbide and metal silicon was 100 parts by mass. A content of the water was 30 parts by mass, when the total of the masses of silicon carbide and metal silicon was 100 parts by mass. An average particle diameter of the silicon carbide powder was 30 µm, and an average particle diameter of the metal silicon powder was 6 µm. The average particle diameters of silicon carbide and metal silicon were values measured by a laser diffraction method.

Next, the forming raw material was kneaded by a vacuum clay kneader, to prepare a columnar kneaded material. The obtained columnar kneaded material was formed using an extrusion forming machine, to obtain a formed honeycomb body having such a shape as in the formed honeycomb body 100 shown in Figs. 1 and 2. Next, the obtained formed honeycomb body was dried, to obtain the dried honeycomb body. Drying was performed at 120°C for three hours.

Next, an electrode forming slurry was prepared. As ceramic raw materials, silicon carbide particles (silicon carbide powder) and metal silicon particles (metal silicon powder) were used. The silicon carbide particles having an average particle diameter of 50 µm and the metal silicon particles having an average particle diameter of 6 µm were mixed at a mass ratio of 70:30. Next, to the obtained mixture, strontium carbonate was added as a sintering auxiliary agent, methylcellulose and glycerin were added as organic binders, and water was added as a solvent, to prepare the electrode forming slurry. A content of methylcellulose was 0.4 parts by mass, when a total of masses of silicon carbide and metal silicon was 100 parts by mass. A content of glycerin was 9 parts by mass, when the total of the masses of silicon carbide and metal silicon was 100 parts by mass. A content of strontium carbonate was 1 part by mass, when the total of the masses of silicon carbide and metal silicon was 100 parts by mass. A content of the water was 38 parts by mass, when the total of the masses of silicon carbide and metal silicon was 100 parts by mass. A viscosity of the obtained electrode forming slurry at 20°C was measured by the method described later. A measurement result was 120 Pa●s.

Next, the electrode forming slurry was applied to two areas of a side surface of the dried honeycomb body which were positioned "on opposite sides of a central axis", and then the dried honeycomb body was maintained at 20°C for three seconds, to prepare the honeycomb body with unfired electrodes having such a shape as in the honeycomb body 200 with the unfired electrodes shown in Figs. 3 to 5. The application of the electrode forming slurry was performed by screen printing. A thickness of each unfired electrode was 150 µm. A temperature of the dried honeycomb body during the application of the electrode forming slurry to the side surface of the dried honeycomb body was 20°C. Moreover, a maintaining temperature of the dried honeycomb body to which the electrode forming slurry had been applied (the honeycomb body with the unfired electrodes) was 20°C.

After The electrode forming slurry was applied to the side surface of the dried honeycomb body, and the dried honeycomb body was maintained at 20°C for three seconds, the honeycomb body with the unfired electrodes was dried. A drying method was a hot air drying method at 120°C for one hour.

Next, the dried honeycomb body with the unfired electrodes was degreased (calcinated), and then fired, to obtain a honeycomb structure. Degreasing was performed at 550°C for two hours. Firing was performed at 1450°C, in an argon atmosphere for two hours. After the firing, the honeycomb structure was left to stand at 1250°C in an air atmosphere for three hours, to perform an oxidation treatment.

The obtained honeycomb structure had a cylindrical shape having a bottom surface diameter of 90 mm and a length of 100 mm in a cell extending direction. Moreover, in the obtained honeycomb structure, a cell density was 90 cells/cm², and a partition wall thickness was 130 µm. Furthermore, a cell shape in a cross section of the obtained honeycomb structure which was perpendicular to the cell extending direction was square.

Moreover, a thickness of each of the two electrode portions was 150 µm, and electrodes having a uniform thickness were formed. The two electrode portions were formed to be positioned on opposite sides of the honeycomb structure via the central axis. Furthermore, a length of each of the two electrode portions in the cell extending direction was 90 mm. Moreover, the two electrode portions had a rectangular shape (a shape obtained by bending the rectangular shape along the side surface of a honeycomb structure portion). Furthermore, a space (a region which was not provided with the electrode portion in the side surface of the honeycomb structure portion) was made between an end of each electrode portion and an end surface (an end) of the honeycomb structure portion, and a length of the space in the cell extending direction was 5 mm. Additionally, an electric resistivity of each electrode portion was 1 Ωcm, and an electric resistivity of the honeycomb structure portion was 100 Ωcm.

The presence or absence of a detachment of each electrode portion in the obtained honeycomb structure (an electrode detachment) was confirmed. Moreover, in the obtained honeycomb structure, a state of heat generation of the honeycomb structure portion at electricity conduction (abnormal heat generation) wasverified. The results are shown in Table 1.

In Table 1, columns for forming raw material indicate mass ratios of silicon carbide particles and metal silicon particles in a ceramic raw material contained in the forming raw material. Moreover, columns for electrode forming slurry indicate mass ratios of silicon carbide particles and metal silicon particles in a ceramic raw material contained in the electrode forming slurry, and a viscosity of the electrode forming slurry at 20°C.

### (Viscosity Measurement)

In a stainless steep cup (inner diameter of 53 mm and depth of 100 mm), 100 to 130 cm³ of the electrode forming slurry was poured and held at 20°C. Then, the viscosity of the electrode forming slurry was measured using a viscometer. As the viscometer, TVB10H type viscometer manufactured by TOKI SANGYO CO., LTD. was used. As measurement conditions, the viscosity was measured in 300 seconds after the start of rotor rotation at a rotor rotation speed of 3 rpm by use of rotor No. H7.

### (Electrode Detachment)

After the dried honeycomb body with the unfired electrodes was degreased (calcinated) and then fired to obtain the honeycomb structure, the presence or absence of the detachment of each electrode portion of the honeycomb structure was visually confirmed.

### (Abnormal Heat Generation)

A power of 5 kW was supplied to each electrode portion of the honeycomb structure for 20 seconds, and then a temperature distribution of each end surface of the honeycomb structure was photographed with an infrared thermometer, and the presence or absence of the abnormal heat generation was confirmed. Here, the abnormal heat generation means a state where a heat generation temperature is 450°C or more.

**[Table 11**

| | Forming raw material | | Electrode forming slurry | | | Temp. of dried honeycomb body during application of electrode forming slurry | Maintaining temp. of honeycomb body after application of electrode forming slurry | Maintaining time after application of electrode forming slurry | Electrode detachment | Abnormal heat generation |
|---|---|---|---|---|---|---|---|---|---|---|
| | Silicon carbide (mass%) | Metal silicon (mass%) | Silicon carbide (mass%) | Metal silicon (mass%) | Viscosity (Pa●s) | | | | | |
| Comparative Example 1 | 70 | 30 | 70 | 30 | 120 | 20°C | 20°C | 2 seconds | Detachment generated | Abnormal heat generated |
| Example 1 | 70 | 30 | 70 | 30 | 120 | 20°C | 20°C | 3 seconds | No detachment | No abnormal heat generation |
| Example 2 | 70 | 30 | 70 | 30 | 120 | 20°C | 20°C | 5 seconds | No detachment | No abnormal heat generation |
| Example 3 | 70 | 30 | 70 | 30 | 120 | 20°C | 20°C | 10 seconds | No detachment | No abnormal heat generation |
| Example 4 | 70 | 30 | 70 | 30 | 120 | 20°C | 20°C | 100 seconds | No detachment | No abnormal heat generation |
| Example 5 | 70 | 30 | 70 | 30 | 120 | 80°C | 20°C | 5 seconds | No detachment | No abnormal heat generation |
| Example 6 | 70 | 30 | 70 | 30 | 120 | 85°C | 20°C | 5 seconds | Little detachment generated | No abnormal heat generation |
| Example 7 | 70 | 30 | 70 | 30 | 500 | 20°C | 20°C | 5 seconds | No detachment | No abnormal heat generation |
| Example 8 | 70 | 30 | 70 | 30 | 600 | 20°C | 20°C | 5 seconds | Little detachment generated | No abnormal heat generation |
| Comparative Example 2 | 100 | 0 | 100 | 0 | 120 | 20°C | 20°C | 2 seconds | Detachment generated | Abnormal heat generated |
| Example 9 | 100 | 0 | 100 | 0 | 120 | 20°C | 20°C | 3 seconds | No detachment | No abnormal heat generation |
| Example 10 | 100 | 0 | 100 | 0 | 120 | 20°C | 20°C | 5 seconds | No detachment | No abnormal heat generation |
| Example 11 | 100 | 0 | 100 | 0 | 120 | 20°C | 20°C | 10 seconds | No detachment | No abnormal heat generation |
| Example 12 | 100 | 0 | 100 | 0 | 120 | 20°C | 20°C | 100 seconds | No detachment | No abnormal heat generation |
| Example 13 | 100 | 0 | 100 | 0 | 120 | 80°C | 20°C | 5 seconds | No detachment | No abnormal heat generation |
| Example 14 | 100 | 0 | 100 | 0 | 120 | 85°C | 20°C | 5 seconds | Little detachment generated | No abnormal heat generation |
| Example 15 | 100 | 0 | 100 | 0 | 500 | 20°C | 20°C | 5 seconds | No detachment | No abnormal heat generation |
| Example 16 | 100 | 0 | 100 | 0 | 600 | 20°C | 20°C | 5 seconds | Little detachment generated | No abnormal heat generation |
| Example 17 | 70 | 30 | 70 | 30 | 120 | 20°C | 80°C | 5 seconds | No detachment | No abnormal heat generation |
| Comparative Example 3 | 70 | 30 | 70 | 30 | 120 | 20°C | 90°C | 5 seconds | Detachment generated | Abnormal heat generated |
| Example 18 | 100 | 0 | 100 | 0 | 120 | 20°C | 80°C | 5 seconds | No detachment | No abnormal heat generation |
| Comparative Example 4 | 100 | 0 | 100 | 0 | 120 | 20°C | 90°C | 5 seconds | Detachment generated | Abnormal heat generated |

### (Examples 2 to 8 and 17 and Comparative Examples 1 and 3)

The procedures of Example 1 were repeated except that manufacturing conditions were changed as shown in Table 1, to prepare the honeycomb structures. As to each obtained honeycomb structure, the presence or absence of detachment of each electrode portion (an electrode detachment) and the state of heat generation of a honeycomb structure portion at electricity conduction (abnormal heat generation) were confirmed in the same manner as in Example 1. The results are shown in Table 1.

### (Example 9)

The procedures of Example 1 were repeated except that a preparing method of a forming raw material, a preparing method of an electrode forming slurry and a firing temperature were changed as follows, to prepare the honeycomb structure. The preparing method of the forming raw material was as follows. As ceramic raw materials, silicon carbide particles having an average particle diameter of 30 µm and silicon carbide particles having an average particle diameter of 0.3 µm were used. The silicon carbide particles having the average particle diameter of 30 µm and the silicon carbide particles having the average particle diameter of 0.3 µm were mixed at a mass ratio of 70:30. To the obtained mixture, methylcellulose was added as an organic binder, and water was further added, to prepare the forming raw material. A content of methylcellulose was 7 parts by mass, when a mass of the whole forming raw material was 100 parts by mass. A content of water was 30 parts by mass, when the mass of the whole forming raw material was 100 parts by mass. Moreover, the preparing method of the electrode forming slurry was as follows. As ceramic raw materials, silicon carbide particles having an average particle diameter of 50 µm and silicon carbide particles having an average particle diameter of 0.3 µm were used. The silicon carbide particles having the average particle diameter of 50 µm and the silicon carbide particles having the average particle diameter of 0.3 µm were mixed at a mass ratio of 70:30. To the obtained mixture, methylcellulose and glycerin were added as organic binders, and water was added as a solvent, to prepare the electrode forming slurry. A content of methylcellulose was 0.4 parts by mass, when the mass of the whole forming raw material was 100 parts by mass. A content of glycerin was 9 parts by mass, when the mass of the whole forming raw material was 100 parts by mass. A content of water was 40 parts by mass, when the mass of the whole forming raw material was 100 parts by mass. A viscosity of the obtained electrode forming slurry at 20°C was 120 Pa●s. Moreover, a firing temperature was 2500°C. As to the obtained honeycomb structure, the presence or absence of detachment of each electrode portion (electrode detachment) and the state of heat generation of a honeycomb structure portion at electricity conduction (abnormal heat generation) were confirmed in the same manner as in Example 1. The results are shown in Table 1.

### (Examples 10 to 16 and 18 and Comparative Examples 2 and 4)

The procedures of Example 9 were repeated except that manufacturing conditions were changed as shown in Table 1, to prepare the honeycomb structures. As to each obtained honeycomb structure, the presence or absence of detachment of each electrode portion (electrode detachment) and the state of heat generation of a honeycomb structure portion at electricity conduction (abnormal heat generation) were confirmed in the same manner as in Example 1. The results are shown in Table 1.

It is seen from Table 1 that when the time to maintain the honeycomb body to which the electrode forming slurry has been applied in a temperature range of 0 to 80°C is from three seconds to 48 hours, the detachment of each electrode portion from the honeycomb structure can be prevented, and the abnormal heat generation at the electricity conduction can be prevented. In consequence, it is seen that the adhesion properties between the honeycomb structure and each electrode portion are suitable.

According to a manufacturing method of honeycomb structure of the present invention, it is possible to prepare a honeycomb structure which can suitably be utilized as a catalyst carrier for an exhaust gas purifying device to purify exhaust gas from cars.

### Description of Reference Numerals

1, 21 and 31: partition wall, 2, 22 and 32: cell, 3, 23 and 33: outer peripheral wall, 5, 25 and 35: side surface, 6: unfired electrode, 8: electrode portion, 11: one end surface, 12: other end surface, 24: dried honeycomb body, 34: honeycomb structure portion, 100: formed honeycomb body, 200: honeycomb body with unfired electrodes, and 300: honeycomb structure.

## Claims

1. A manufacturing method of a honeycomb structure comprising:
a formed honeycomb body preparing step of extruding a forming raw material containing a ceramic raw material and an organic binder, to prepare a formed honeycomb body having partition walls with which a plurality of cells extending from one end surface to the other end surface are formed to define through channels of a fluid, and an outer peripheral wall positioned in the outermost periphery;
a dried honeycomb body preparing step of drying the formed honeycomb body to prepare the dried honeycomb body;
a honeycomb body with unfired electrodes preparing step of applying an electrode forming slurry containing a ceramic raw material and water to a side surface of the dried honeycomb body, and then maintaining the honeycomb body in a temperature range of 0 to 80°C for three seconds to 48 hours to form the unfired electrodes, to prepare the honeycomb body with the unfired electrodes; and
a honeycomb structure preparing step of drying and firing the honeycomb body with the unfired electrodes to prepare the honeycomb structure.

2. The manufacturing method of the honeycomb structure according to claim 1,
wherein the ceramic raw material in the forming raw material and the ceramic raw material in the electrode forming slurry contain metal silicon and silicon carbide particles as main components, or contain silicon carbide particles as the main components.

3. The manufacturing method of the honeycomb structure according to claim 1 or 2,
wherein a viscosity of the electrode forming slurry at 20°C is 500 Pa●s or less.

4. The manufacturing method of the honeycomb structure according to any one of claims 1 to 3,
wherein the temperature of the dried honeycomb body during the application of the electrode forming slurry to the side surface of the dried honeycomb body is from 0 to 80°C.
